(19) Europäisches Patentamt
European Patent Office
Office européen des brevets

(11) Numéro de publication: **0 449 357 B1**

(12) **FASCICULE DE BREVET EUROPEEN**

(45) Date de publication de fascicule du brevet: **22.02.95**

(51) Int. Cl.[6]: **B29C 47/86**, B29C 47/20, //B29K31:00

(21) Numéro de dépôt: **91200603.8**

(22) Date de dépôt: **19.03.91**

(54) **Pellicule en résine à base de copolymère d'éthylène et d'acétate de vinyle dont au moins une des faces présente un aspect rugueux et procédé pour sa réalisation.**

(30) Priorité: **30.03.90 BE 9000360**

(43) Date de publication de la demande:
**02.10.91 Bulletin 91/40**

(45) Mention de la délivrance du brevet:
**22.02.95 Bulletin 95/08**

(84) Etats contractants désignés:
**AT CH DE DK ES FR GB GR IT LI LU NL SE**

(56) Documents cités:
**EP-A- 0 068 271**
**EP-A- 0 210 108**
**EP-A- 0 364 021**

**JAPANESE PATENT GAZETTE, section Ch, semaine C25, 30 juillet 1980, classe A17,page 12, no. 44363C/25, Derwent Publications Ltd, Londres, GB; & JP-A-55 063 228 (MITSUI TOATSU) 13-05-1980**

(73) Titulaire: **SOLVAY (Société Anonyme)**
**Rue du Prince Albert, 33**
**B-1050 Bruxelles (BE)**

(72) Inventeur: **Dehennau, Claude**
**Chemin des Postes, 236**
**B-1410 Waterloo (BE)**
Inventeur: **Dupont, Serge**
**Sint-Annalaan, 108**
**B-1800 Vilvoorde (BE)**
Inventeur: **Vonk, Martin**
**Sebastian Centenweg, 120**
**NL-1602 EK Enkhuizen (NL)**

(74) Mandataire: **Bouchoms, Maurice et al**
**Solvay**
**Département de la Propriété Industrielle,**
**310, rue de Ransbeek**
**B-1120 Bruxelles (BE)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.09/3.3.3)

## Description

La présente invention concerne une pellicule en résine à base de copolymère d'éthylène et d'acétate de vinyle dont au moins une des faces présente un aspect rugueux et qui convient particulièrement, de ce fait, pour réaliser des sacs d'emballage qui peuvent être stérilisés par rayonnement gamma ainsi qu'un procédé pour réaliser de telles pellicules.

Il est bien connu, jusqu'à présent, de réaliser des pellicules en résine à base de polychlorure de vinyle dont au moins une des faces présente un aspect rugueux et qui conviennent également pour réaliser des sacs d'emballage. Pour réaliser de telles pellicules, on procède généralement par extrusion soufflée d'une gaine tubulaire qui est ensuite applatie et découpée. Afin d'éviter des problèmes dus à une adhérence non souhaitée entre des pellicules en contact lors des opérations de production des sacs, il a déjà été proposé de réaliser ces pellicules de façon telle qu'au moins une de leurs faces présente un aspect rugueux, un tel aspect pouvant notamment être obtenu directement en réfrigérant la gaine extrudée en amont de l'orifice de sortie de la filière d'extrusion.

Ainsi, dans la demande de brevet français 88-13404, la demanderesse a déjà décrit un procédé qui permet de garantir la production, par extrusion soufflée, d'une gaine en résine à base de polychlorure de vinyle dont au moins une de faces présente un aspect mat.

Ce type de gaine convient certes pour produire des sacs d'emballage mais présente cependant l'inconvénient d'imposer la mise en oeuvre de résines contenant des plastifiants qui peuvent éventuellement migrer dans les produits emballés.

Pour remédier à cet inconvénient, la demanderesse a, dès lors, envisagé de remplacer la résine à base de polychlorure de vinyle par une résine à base de copolymère d'éthylène et d'acétate de vinyle. Il apparaît, en effet, que des sacs réalisés à partir d'une telle résine conviennent particulièrement notamment pour le conditionnement de produits d'usage médical tels que des solutions d'acides aminés, de dextrose ou des émulsions de lipides, de vitamines grasses, etc.

La demanderesse a toutefois constaté que les résines à base de copolymère d'éthylène et d'acétate de vinyle ne se prêtent pas facilement à la production de pellicules dont au moins une des faces présente une rugosité suffisante pour permetttre leurs mises en oeuvre sans problèmes provoqués par des adhérences non souhaitées. En particulier, en appliquant le procédé décrit dans la demande de brevet français 88-13404 sus-mentionnée, elle a constaté que les gaines et ou les pellicules produites ne présentaient pas à coup sûr une rugosité satisfaisante.

La demanderesse est néanmoins parvenue à produire une telle pellicule en résine à base de copolymère d'éthylène et d'acétate de vinyle.

La présente invention concerne, dès lors, à titre principal, une pellicule à base de copolymère d'éthylène et d'acétate de vinyle dont au moins une des faces présente un aspect rugueux la rendant apte à être mise en oeuvre sans rencontrer des problèmes d'adhérence.

L'invention concerne donc une pellicule en résine à base de copolymère d'éthylène et d'acétate de vinyle dont au moins une des faces présente un aspect rugueux qui se caractérise en ce que le rapport entre le degré moyen de rugosité des faces d'aspect rugueux, exprimé en microns et mesuré selon la norme ISO R468-1966, et le pourcentage en poids d'unités dérivées de l'acétate de vinyle du copolymère constituant la pellicule est supérieur à 0,019.

La pellicule conforme à l'invention peut être, soit une pellicule monocouche constituée exclusivement d'un copolymère d'éthylène et d'acétate de vinyle, soit encore une pellicule composite produite, par exemple, par coextrusion et constituée d'une pluralité de couches en des matières plastiques différentes, la pellicule présentant, dans ce cas, au moins une face externe réalisée à partir de copolymère d'éthylène et d'acétate de vinyle.

Il a, en effet, été constaté que, pour éliminer tout problème d'adhérence, il convient que le degré rugosité de la pellicule produite soit directement proportionnel au pourcentage en poids d'unités dérivées de l'acétate de vinyle de son copolymère constitutif.

Lorsque cette condition est respectée, il apparaît, en effet, que la pellicule convient parfaitement pour la production de sacs.

La demanderesse a, par ailleurs, constaté que lorsque la pellicule ne satisfait pas à la caractéristique sus-mentionnée, non seulement la réalisation et l'utilisation (soudage de sacs à partir de gaines enroulées, placement d'inserts, remplissage des sacs, séparation des sacs, etc) de sacs sont rendues difficiles mais encore les sacs produits sont collants au toucher, sensibles à la griffe et se chargent facilement de poussières.

Afin d'éliminer avec certitude les inconvénients susmentionnés, la demanderesse préfère d'ailleurs que le rapport précisé ci-avant soit supérieur à 0,02.

A titre de résine à base de copolymère d'éthylène et d'acétate de vinyle, la demanderesse préfère mettre en oeuvre des copolymères contenant de 10 à 30 pourcents en poids d'unités dérivées de l'acétate de vinyle.

Le degré moyen de rugosité des pellicules conformes à l'invention est déterminé selon la norme ISO R468-1966 à l'aide d'un appareil de type Perth-O-Meter qui est basé sur une mesure moyennée de l'amplitude des déplacements d'une aiguille perpendiculaire à la surface à caractériser.

La présente invention concerne également, à titre secondaire, un procédé permettant la réalisation de telles pellicules.

L'invention concerne donc également un procédé pour réaliser une pellicule en résine à base de copolymère d'éthylène et d'acétate de vinyle qui se caractérise en ce que la pellicule est réalisée, sous forme d'une gaine, par extrusion soufflée et en ce qu'au moins une des faces de la filière et de la pellicule produite est refroidie superficiellement en amont de l'orifice de sortie de la filière d'extrusion par une circulation d'un fluide réfrigérant dont la température T est choisie de façon à respecter la relation :

$$- 20°C < T < \frac{Tc - Tm[aG^n + A(Lf/L)^2 + B(Lf/L)]}{1 - [aG^n + A(Lf/L)^2 + B(Lf/L)]}$$

dans laquelle :

- Tc est la température pour laquelle le logarithme népérien du rapport entre la longueur à la rupture et la longueur initiale d'une éprouvette du copolymère vaut 87 % de sa valeur à 180 °C, l'allongement à la rupture étant mesurée au moyen d'un viscosimètre élongationnel à un gradien de vitesse constant de 5 $sec^{-1}$
- Tm est la température moyenne du copolymère à sa sortie de la filière.
- a est égal à 0,24
- G est donné par la relation

$$\frac{\rho . Cp . \vec{V} . H^2}{\lambda . L}$$

dans laquelle :

- $\rho$ est la masse volumique du copolymère
- Cp est la chaleur spécifique du copolymère
- $\vec{V}$ est la vitesse moyenne d'écoulement du copolymère au travers de la filière d'extrusion
- H est la hauteur de l'entrefer entre le noyau et la filière d'extrusion
- $\lambda$ est la conductivité thermique du copolymère
- L est la longueur de la zone de réfrigération
- n est égal à 0,1688
- A est égal à -0,0148
- Lf est la distance entre l'extrémité de la zone de réfrigération et l'extrémité de la filière
- B est égal à 0,2175.

Dans la formule donnée ci-avant, H, L, et Lf sont exprimés en millimètres et $\vec{V}$ est exprimé en cm/sec.

La réfrigération superficielle d'une ou des deux faces de la gaine extrudée est obtenue par une circulation d'un fluide réfrigérant, généralement de l'huile ou un glycol, dans l'extrémité de la filière et/ou du noyau du dispositif d'extrusion. Cette réfrigération est, de préférence, réalisée par un mince film annulaire de fluide réfrigérant (épaisseur de l'ordre du millimètre) circulant axialement, c'est-à-dire selon la direction de l'axe d'extrusion, de façon à assurer un refroidissement symétrique de la gaine conduisant à un produit de rugosité uniforme. La longueur de la zone réfrigérée peut varier entre 3 et 30 mm et la distance entre l'extrémité de la zone réfrigérée et l'extrémité de la filière d'extrusion peut varier entre 0 et 60 mm.

En règle générale, il convient que la distance entre le début de la zone réfrigérée et l'orifice de sortie de la filiere n'excède pas 70 mm afin de ne pas générer une contre-pression inacceptable dans le dispositif d'extrusion en amont de la zone réfrigérée.

La température moyenne Tm du copolymère à sa sortie de la filière est aisément déterminée notamment au moyen de sondes thermométriques, cette température se situant généralement entre 160 et

200°C et, de préférence entre 170 et 190°C.

Il a encore été constaté que la vitesse d'étirage exercée sur la gaine au sortir de la filiere d'extrusion influence favorablement l'apparition d'une rugosité. On préfère, dès lors, que cette vitesse d'étirage soit, de préférence, comprise entre 120 et 600 % de la vitesse moyenne de la résine à la sortie de la filière.

Enfin, il a encore été constaté qu'un changement brutal de la géométrie du canal d'écoulement de la résine en fin de filière et après la zone de réfrigération, tel qu'une réduction brusque de la section de passage de la résine extrudée, peut se révéler très bénéfique.

Le procédé conforme à l'invention est, en outre, illustré et explicité plus en détail par la description qui va suivre d'une série d'essais de réalisation pratique.

Pour la réalisation de ces essais, on a mis en oeuvre une série de copolymères d'éthylène et d'acétate de vinyle contenant de 14 à 28 pourcents en poids d'unités dérivées de l'acétate de vinyle.

Avec ces copolymères, on a extrudé une série de gaines en utilisant des têtes d'extrusion du type déjà exploité dans la demande de brevet français 88-013404 et représentées au figures 1 et 2 des dessins annexés dans lesquelles :

- la fig. 1 est une vue schématique et en coupe d'une tête d'extrusion
- la fig. 2 est une vue partielle, de détail et en coupe, du système de réfrigération de la filière de la tête d'extrusion selon la fig. 1.

La tête d'extrusion représentée dans les figures 1 et 2 comporte une filière annulaire 1 et un noyau interne 2 maintenu au moyen d'ailettes porte-noyau 3. Le noyau comporte un canal central 4, ce qui permet d'insuffler un fluide sous pression, en général de l'air, dans la gaine extrudée ainsi qu'il est usuel dans toute installation d'extrusion soufflée.

L'extrémité du noyau 2 et l'extrémité de la filière 1 sont équipées d'un système de réfrigération annulaire 5 comportant deux chambres espacées axialement 6 et 7, raccordées entre elles par un canal annulaire 8. Dans le système de réfrigération de la filière, une des chambres est raccordée à une conduite 9 d'amenée d'un fluide réfrigérant, en l'occurrence de l'huile, et l'autre à une conduite 10 d'évacuation de ce fluide.

Les deux chambres (11,12) du système de réfrigération du noyau sont également et respectivement raccordées à des conduites d'amenée 13 et d'évacuation 14 d'un fluide réfrigérant qui traversent le noyau 2 et une des ailettes porte-noyau 3.

Les conduites d'amenée (9,13) et d'évacuation (10,14) du fluide réfrigérant sont équipées d'une garniture d'isolant thermique, non représentée, de même que les systèmes de réfrigération hormis sur leur face en regard avec le canal d'écoulement du copolymère extrudé.

Dans la fig.2, on a, en outre, fait apparaître la longueur L de la zone de réfrigération, la hauteur H de l'entrefer de la filière dans la zone réfrigérée et la distance Lf entre l'orifice de sortie de la filière et l'extrémité aval de la zone réfrigérée.

Le tableau 1 ci-après reprend les données et les résultats des essais effectués, les essais 1R à 6R ne respectant pas les conditions imposées par le procédé conforme à l'invention et étant donnés à titre comparatif. Dans ce tableau, on a fait apparaître les différentes teneurs exprimées en pourcentages en poids d'unités dérivées de l'acétate de vinyle des différents copolymères expérimentés, les valeurs différentes attribuées aux paramètres L, Lf, H, $\vec{V}$, et Tm (température moyenne), les valeurs calculées de $aG^n$ et de $A(Lf/L)^2 + B(Lf/L)$, les températures maxima calculées (Tmax) autorisées, pour le fluide réfrigérant, pour chaque essai, selon le procédé conforme à l'invention, les températures T expérimentées pour le fluide réfrigérant, les degrés de rugosité constatés lors de chaque essai et la valeur du rapport entre ces degrés de rugosité et le pourcentage en poids d'unités dérivées de l'acétate de vinyle du copolymère mis en oeuvre.

Ainsi qu'il apparaît à l'examen du tableau 1, les essais 1R à 6R, réalisés en utilisant un fluide réfrigérant dont la température dépasse la température maximum calculée autorisée selon le procédé de l'invention, conduisent à des pellicules qui sont exclues du cadre de la présente invention et qui présentent, en fait, des propriétés d'adhérence non souhaitées.

Par contre, les essais 7 à 16 effectués dans le cadre du procédé selon l'invention conduisent à des pellicules faisant partie du cadre de l'invention et qui conviennent particulièrement pour la production de sacs d'emballage.

**TABLEAU 1**

| ESSAI | % d'acétate de vinyle | L mm | Lf mm | H mm | $\vec{V}$ cm/sec | Tm °C | $aG^n$ | $A(Lf/L)^2+B(Lf/L)$ | T °C | T max. °C | rugosité microns | rugosité % d'acétate de vinyle | remarques |
|---|---|---|---|---|---|---|---|---|---|---|---|---|---|
| 1R | 18 | 4 | 0 | 0,7 | 7,46 | 180 | 0,4932 | 0 | 120 | 92 | 0,28 | 0,0155 | adhérence |
| 2R | 18 | 18 | 24 | 1 | 4,08 | 185 | 0,3898 | 0,2632 | 90 | 41 | 0,20 | 0,0111 | adhérence |
| 3R | 28 | 4 | 0 | 0,7 | 5,43 | 185 | 0,4676 | 0 | 110 | 82 | 0,46 | 0,0164 | adhérence |
| 4R | 14 | 4 | 0 | 0,7 | 5,93 | 185 | 0,4744 | 0 | 100 | 62 | 0,24 | 0,0171 | adhérence |
| 5R | 24 | 4 | 0 | 0,7 | 5,87 | 172 | 0,4736 | 0 | 90 | 54 | 0,23 | 0,0095 | adhérence |
| 6R | 24 | 4 | 0 | 0,7 | 5,87 | 172 | 0,4736 | 0 | 60 | 54 | 0,36 | 0,0150 | adhérence |
| 7 | 18 | 4 | 0 | 0,7 | 7,46 | 180 | 0,4932 | 0 | 90 | 92 | 0,39 | 0,0216 | pas d'adhérence |
| 8 | 18 | 18 | 13,5 | 1 | 4,08 | 185 | 0,3898 | 0,1548 | 60 | 75 | 0,41 | 0,0227 | pas d'adhérence |
| 9 | 18 | 18 | 24 | 1 | 4,08 | 185 | 0,3898 | 0,2632 | 30 | 41 | 0,46 | 0,0255 | pas d'adhérence |
| 10 | 18 | 18 | 34 | 1 | 4,08 | 170 | 0,3898 | 0,3583 | 30 | 32 | 0,37 | 0,0205 | pas d'adhérence |
| 11 | 28 | 4 | 0 | 0,7 | 5,43 | 185 | 0,4674 | 0 | 80 | 82 | 0,78 | 0,0278 | pas d'adhérence |
| 12 | 28 | 18 | 13,5 | 0,7 | 7,72 | 185 | 0,3848 | 0,1548 | 60 | 66 | 0,89 | 0,0317 | pas d'adhérence |
| 13 | 14 | 4 | 0 | 0,7 | 5,93 | 185 | 0,4744 | 0 | 60 | 62 | 0,36 | 0,0257 | pas d'adhérence |
| 14 | 24 | 4 | 0 | 0,7 | 5,87 | 172 | 0,4736 | 0 | 30 | 54 | 0,81 | 0,0337 | pas d'adhérence |
| 15 | 18 | 4 | 0 | 0,7 | 7,46 | 180 | 0,4932 | 0 | 31 | 92 | 0,91 | 0,0505 | pas d'adhérence |
| 16 | 28 | 4 | 0 | 0,7 | 5,43 | 185 | 0,4674 | 0 | 30 | 82 | 1,57 | 0,0560 | pas d'adhérence |

## Revendications

**1.** Pellicule en résine à base de copolymère d'éthylène et d'acétate de vinyle dont au moins une des faces présente un aspect rugueux caractérisée en ce que le rapport entre le degré moyen de rugosité

des faces d'aspect rugueux, exprimé en microns et mesuré selon la norme ISO R468-1966, et le pourcentage en poids d'unités dérivées de l'acétate de vinyle du copolymère constituant la pellicule est supérieur à 0,019.

2. Pellicule selon la revendication 1 caractérisée en ce que le rapport est supérieur à 0,02.

3. Pellicule selon la revendication 1 ou 2 caractérisée en ce que le copolymère contient de 10 à 30 pourcents en poids d'unités dérivées de l'acétate de vinyle.

4. Procédé pour réaliser une pellicule selon l'une quelconque des revendications 1 à 3 caractérisé en ce que la pellicule est réalisée, sous forme d'une gaine, par extrusion soufflée et en ce que au moins une des faces de la filière et de la pellicule produite est refroidie superficiellement en amont de l'orifice de sortie de la filière d'extrusion (1) par une circulation d'un fluide réfrigérant dont la température T est choisie de façon à respecter la relation :

$$-20°C < T < \frac{Tc - Tm[aG^n + A(Lf/L)^2 + B(Lf/L)]}{1 - [aG^n + A(Lf/L)^2 + B(Lf/L)]}$$

dans laquelle :

Tc est la température pour laquelle le logarithme népérien du rapport entre la longueur à la rupture et la longueur initiale d'une éprouvette du copolymère vaut 87 % de sa valeur à 180 °C, l'allongement à la rupture étant mesuré au moyen d'un viscosimètre élongationnel à un gradien de vitesse de traction constant de 5 $sec^{-1}$

Tm est la température moyenne du copolymère à sa sortie de la filière

a est égal à 0,24

G est donné par la relation

$$\frac{\rho.Cp.V.H^2}{\lambda.L}$$

dans laquelle :

ρ est la masse volumique du copolymère

Cp est la chaleur spécifique du copolymère

V est la vitesse moyenne d'écoulement du copolymère au travers de la filière d'extrusion

H est la hauteur de l'entrefer entre le noyau et la filière d'extrusion

λ est la conductivité thermique du copolymère

L est la longueur de la zone de réfrigération

n est égal à 0,1688

A est égal à -0,0148

Lf est la distance entre l'extrémité de la zone de réfrigération et l'extrémité de la filière

B est égal à 0,2175.

5. Procédé selon la revendication 4 caractérisé en ce que la réfrigération est réalisée par un mince film annulaire de fluide réfrigérant (5) circulant selon la direction de l'axe d'extrusion.

6. Procédé selon la revendication 4 caractérisé en ce que la gaine extrudée est soumise à un étirage sous une vitesse comprise entre 120 et 600 % de la vitesse moyenne de la résine à la sortie de la filière.

7. Procédé selon la revendication 4 caractérisé en ce que la longueur L de la zone réfrigérée varie entre 3 et 30 mm et en ce que la distance Lf entre l'extrémité de la zone réfrigérée et l'extrémité de la filière d'extrusion (1) varie entre 0 et 60 mm.

8. Procédé selon la revendication 4 caractérisé en ce qu'en fin de filière on fait passer le copolymère extrudé par une section de passage brusquement réduite.

## Claims

1. Film of resin based on a copolymer of ethylene and vinyl acetate at least one of whose faces has a rough appearance, characterised in that the relationship between the average degree of roughness of the faces of rough appearance, expressed in microns and measured according to ISO standard R468-1966, and the percentage by weight of units derived from vinyl acetate in the copolymer of which the film consists is greater than 0.019.

2. Film according to Claim 1, characterised in that the relationship is greater than 0.02.

3. Film according to Claim 1 or 2, characterised in that the copolymer contains from 10 to 30 per cent by weight of units derived from vinyl acetate.

4. Process for producing a film according to any one of Claims 1 to 3, characterised in that the film is produced in the form of a sleeve by blow extrusion and in that at least one of the faces of the die and of the film produced is cooled superficially upstream of the exit orifice of the extrusion die (1) by a circulation of a coolant fluid whose temperature T is chosen so as to obey the relationship :

$$-20\ °C < T < \frac{Tc - Tm[aG^n + A(Ld/L)^2 + B(Ld/L)]}{1 - [aG^n + A(Ld/L)^2 + B(Ld/L)]}$$

in which :

Tc is the temperature at which the Napierian logarithm of the relationship between the length at break and the initial length of a test specimen of the copolymer has a value of 87 % of its value at 180 °C, the elongation at break being measured by means of an elongational viscometer at a constant pull rate gradient of 5 $s^{-1}$

Tm is the mean temperature of the copolymer as it leaves the die

a is equal to 0.24

G is given by the relationship

$$\rho x Cp x \vec{V} x H^2 / \lambda X L$$

in which;

$\rho$ is the density of the copolymer

Cp is the specific heat of the copolymer

$\vec{V}$ is the mean flow velocity of the copolymer through the extrusion die

H is the height of the gap between the core and the extrusion die

$\lambda$ is the thermal conductivity of the copolymer

L is the length of the cooling zone

n is equal to 0.1688

A is equal to -0.0148

Ld is the distance between the end of the cooling zone and the end of the die

B is equal to 0.2175.

5. Process according to Claim 4, characterised in that the cooling is produced by a thin annular film of cooling fluid (5) moving along the direction of the extrusion axis.

6. Process according to Claim 4, characterised in that the extruded sleeve is subjected to hauling-off at a speed of between 120 and 600 % of the average speed of the resin at the die exit.

7. Process according to Claim 4, characterised in that the length of the cooled zone L varies between 3 and 30 mm and in that the distance between the end of the cooled zone and the end of the extrusion die (1) varies between 0 and 60 mm.

8. Process according to Claim 4, characterised in that at the end of the die the extruded copolymer is passed through an abruptly reduced flow section.

**Patentansprüche**

1. Folie aus einem Hart auf Ethylen-Vinylacetat-Copolymer-Basis mit wenigstens einer aufgerauhten Fläche, dadurch gekennzeichnet, daß das Verhältnis zwischen dem mittleren Rauhigkeitsgrad der rauhen Flächen, ausgedrückt in Mikrometern und gemessen gemäß der Norm ISO R468-1966, und den Gewichtsprozenten der vom Vinylacetat des Copolymeren, das die Folie bildet, abgeleiteten Einheiten größer als 0,019 ist.

2. Folie gemäß Anspruch 1, dadurch gekennzeichnet, daß das Verhältnis größer als 0,02 ist.

3. Folie gemäß Anspruch 1 oder 2, dadurch gekennzeichnet, daß das Copolymere 10 bis 30 Gewichtsprozent vom Vinylacetat abgeleitete Einheiten enthält.

4. Verfahren zur Herstellung einer Folie gemäß irgendeinem der Ansprüche 1 bis 3, dadurch gekennzeichnet, daß die Folie in Form eines Schlauchs durch Extrusionsblasen hergestellt wird, und dadurch, daß wenigstens eine der Flächen der Düse und der erzeugten Folie oberhalb der Austrittsöffnung der Extrusionsdüse (1) durch Zirkulation einer Kühlflüssigkeit oberflächlich gekühlt wird, deren Temperatur T so gewählt wird, daß die Beziehung:

$$-20\,°C < T < \frac{Tc - Tm\left[aG^n + A(Lf/L)^2 + B(Lf/L)\right]}{1 - \left[aG^n + A(Lf/L)^2 + B(Lf/L)\right]}$$

eingehalten wird, in welcher:

Tc die Temperatur ist, für die der natürliche Logarithmus des Verhältnisses zwischen der Länge beim Bruch und der Anfangslänge einer Copolymerprobe 87% seines Wertes bei 180 °C beträgt, wobei die Dehnung beim Bruch mittels eines Elongations-Viskosimeters mit einem konstanten Gradienten der Zuggeschwindigkeit von 5 $s^{-1}$ gemessen wird,
Tm die mittlere Temperatur des Copolymeren bei seinem Austritt aus der Düse ist,
a gleich 0,24 ist,
G durch die Beziehung

$$\frac{\rho \cdot Cp \cdot V \cdot H^2}{\lambda \cdot L}$$

gegeben ist,

in der:
$\rho$ die Dichte des Copolymeren ist,
Cp die spezifische Wärmekapazität des Copolymeren ist,
V die mittlere Fließgeschwindigkeit des Copolymeren in der Extrusionsdüse ist,
H die Höhe des Spalts zwischen dem Kern und der Extrusionsdüse ist,
$\lambda$ die thermische Leitfähigkeit des Copolymeren ist,
L die Länge der Kühlzone ist,
n gleich 0,1688 ist,
A gleich -0,0148 ist,
Lf der Abstand zwischen dem Ende der Kühlzone und dem Ende der Düse ist,

B gleich 0,2175 ist.

**5.** Verfahren gemäß Anspruch 4, dadurch gekennzeichnet, daß die Kühlung durch einen dünnen ringförmigen Film der Kühlflüssigkeit (5) bewirkt wird, die entsprechend der Richtung der Extrusionsachse zirkuliert.

**6.** Verfahren gemäß Anspruch 4, dadurch gekennzeichnet, daß der extrudierte Schlauch mit einer Geschwindigkeit zwischen 120 und 600% der mittleren Geschwindigkeit des Hartes beim Austritt aus der Düse gestreckt wird.

**7.** Verfahren gemäß Anspruch 4, dadurch gekennzeichnet, daß die Länge L der gekühlten Zone zwischen 3 und 30 mm variiert, und dadurch, daß der Abstand Lf zwischen dem Ende der gekühlten Zone und dem Ende der Extrusionsdüse (1) zwischen 0 und 60 mm variiert.

**8.** Verfahren gemäß Anspruch 4, dadurch gekennzeichnet, daß das extrudierte Copolymere am Ende der Düse einen plötzlich verringerten Durchgangsquerschnitt passiert.

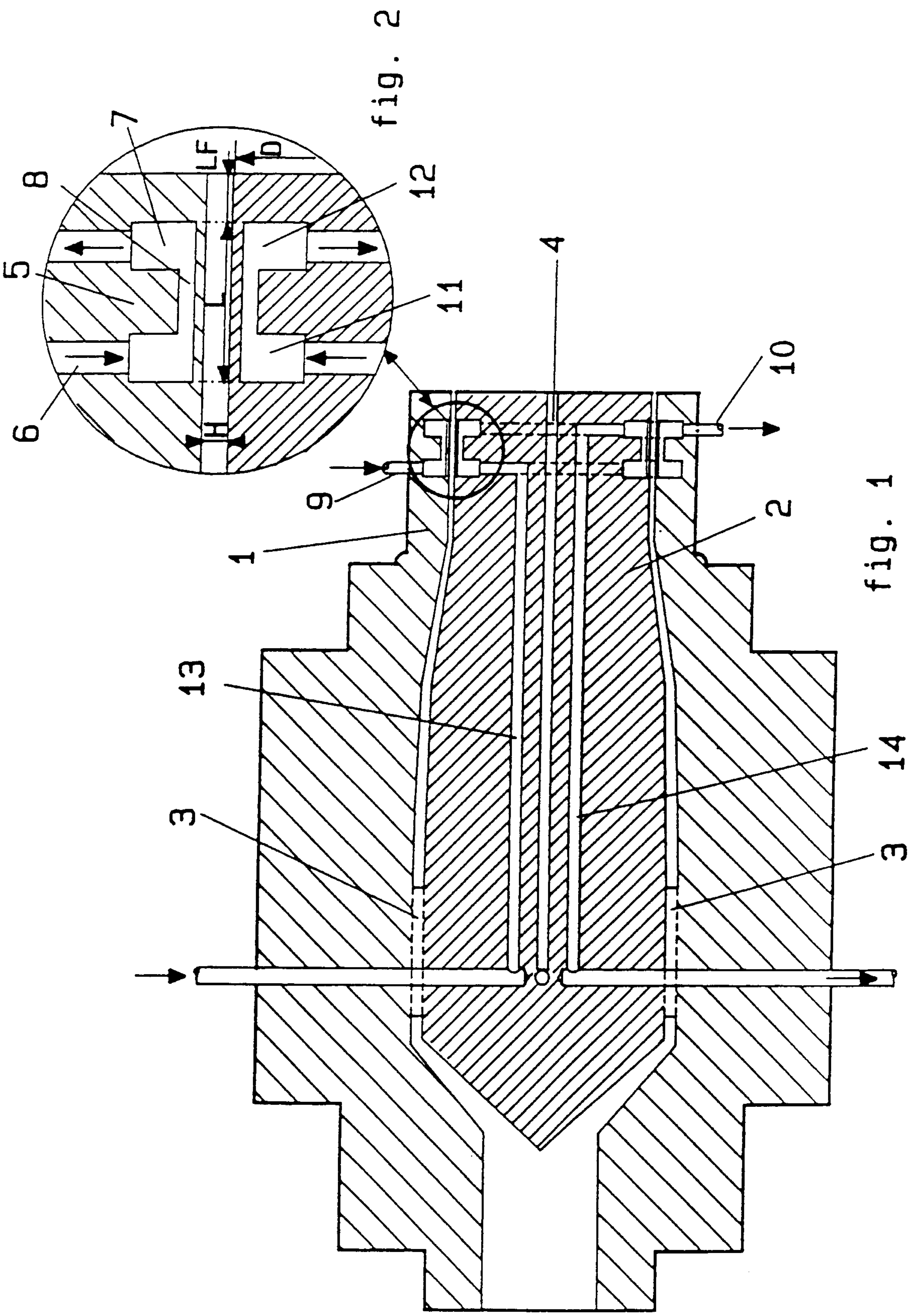
fig. 2
7
8
5
6
12
11
LF
D
H
4
10
9
1
2
13
14
3
3
fig. 1